# EUROPÄISCHE PATENTSCHRIFT

(11) **EP 4 408 693 B1**
(45) Veröffentlichungstag und Bekanntmachung des Hinweises auf die Patenterteilung: **09.04.2025**
(21) Anmeldenummer: 23794341.0
(22) Anmeldetag: 24.10.2023
(51) Int. Cl.: B60K 35/00, B60K 35/22, B60K 35/50, B60K 35/60, B62D 65/02

(54) **VERFAHREN ZUR INTEGRATION EINES ELEKTRISCH ANSTEUERBAREN DISPLAY-ELEMENTS IN EINE KAROSSERIEAUSSENHAUT UND KRAFTFAHRZEUG**
METHOD FOR INTEGRATING AN ELECTRICALLY CONTROLLED DISPLAY ELEMENT INTO A BODY OUTER SKIN, AND MOTOR VEHICLE
PROCÉDÉ D'INTÉGRATION D'ÉLÉMENT D'AFFICHAGE À COMMANDE ÉLECTRIQUE DANS UNE ENVELOPPE EXTÉRIEURE DE CARROSSERIE, ET VÉHICULE À MOTEUR

(30) Priorität: 01.12.2022 DE 102022131825
(43) Veröffentlichungstag der Anmeldung: 07.08.2024
(73) Patentinhaber: Bayerische Motoren Werke Aktiengesellschaft, 80809 München (DE)
(72) Erfinder: Die Erfindernennung liegt noch nicht vor
(86) Internationale Anmeldenummer: PCT/EP2023/079532
(87) Internationale Veröffentlichungsnummer: WO 2024/115015

(56) Entgegenhaltungen:
- WO-A1-2018/081338
- DE-A1- 102012 003 200
- US-A1- 2021 114 462
- US-B1- 9 188 293

## Beschreibung

### TECHNISCHES GEBIET

Die Erfindung betrifft ein Verfahren zur Integration eines elektrisch ansteuerbaren Display-Elements in eine Karosserieaußenhaut einer Kraftfahrzeugkarosserie oder eines Kraftfahrzeugkarosserie-Elements. Sie betrifft weiterhin ein Kraftfahrzeug mit einem nach einem solchen Verfahren in die Karosserieaußenhaut integrierten elektrisch ansteuerbaren Display-Element.

### HINTERGRUND DER ERFINDUNG

Aus der Theorie und von Showfahrzeugen ist es bekannt, in oder an der Karosserieaußenhaut von Fahrzeugen in ihrem optischen Erscheinungsbild wandelbare Anzeigeeinrichtungen vorzusehen. Derartige Displays oder Leuchtelemente werden üblicherweise hinter oder in transparente Scheiben oder Bauteile integriert oder dahinter verklebt. Es ist jedoch nicht überall am Fahrzeug möglich, ein aus Kunststoff bestehendes transparentes Bauteil vorzusehen, da dieses mitunter nicht die mechanischen, elektromagnetischen oder wirtschaftlichen Anforderungen an ein Karosserieelement erfüllt.

### STAND DER TECHNIK

Aus der DE 20 2005 020 199 U1 ist ein Karosserie-Element einer Kraftfahrzeugkarosserie bekannt, dessen Karosserieaußenhaut mit einem Durchbruch versehen ist, in den eine transparente Scheibe eingesetzt ist, hinter der eine hinterleuchtete statische Maske angebracht ist. Anstelle der mit der hinterleuchteten Maske versehenen Scheibe kann in dem Durchbruch der Karosserieaußenhaut auch eine LCD-Anzeige in den Durchbruch eingesetzt sein. Durch das Vorsehen des Durchbruchs ist die Karosserieaußenhaut hinsichtlich ihrer mechanischen Eigenschaften geschwächt. Auch wird eine von der metallischen Karosserieaußenhaut gebildete elektromagnetische Abschirmung durch einen solchen Durchbruch unterbrochen.

Aus der DE 10 2019 131 997 A1 sind ein Verfahren zur Integration eines Displays in eine Karosserieaußenhaut und ein Kraftfahrzeug mit einer solchen Karosserieaußenhaut bekannt, wobei das Display auf der Außenseite der Karosserieaußenhaut vorgesehen und in eine Vertiefung der Karosserieaußenhaut eingesetzt ist. Bei dieser Ausführungsform ist das Display ständig den auf das Fahrzeug von außen einwirkenden Witterungseinflüssen ausgesetzt.

In der nicht vorveröffentlichten deutschen Patentanmeldung DE 10 2022 000 005.9 wird eine E-Paper-Folie zur Anbringung auf der Karosserieaußenhaut eines Kraftfahrzeugs beschrieben, die mit einem Muster von die Folie lokal durchtrennenden Kompressionseinschnitten versehen ist, wodurch die E-Paper-Folie flexibel wird und sich der Karosseriekontur anpassen kann.

### DARSTELLUNG DER ERFINDUNG

Aufgabe der vorliegenden Erfindung ist es, ein verbessertes Verfahren zur Integration eines elektrisch ansteuerbaren Display-Elements in eine Karosserieaußenhaut anzugeben. Weiterhin soll ein entsprechendes Kraftfahrzeug angegeben werden.

Der auf das Verfahren gerichtete Teil der Aufgabe wird gelöst mit den Merkmalen des Patentanspruchs 1.

Ein erfindungsgemäßes Verfahren zur Integration eines elektrisch ansteuerbaren Display-Elements in eine Karosserieaußenhaut einer Kraftfahrzeugkarosserie oder eines Kraftfahrzeugkarosserie-Elements umfasst die Schritte:
a) Bereitstellen eines die Karosserieaußenhaut aufweisenden Karosseriekörpers, wobei die Karosserieaußenhaut eine zur Fahrzeugaußenseite weisende Außenoberfläche und eine zur Fahrzeuginnenseite weisende Innenoberfläche aufweist;
b) Einbringen von zumindest einem Sichtfenster-Durchbruch in die Karosserieaußenhaut;
c) Auftragen von zumindest einer Klebstoffbahn auf die Innenoberfläche der Karosserieaußenhaut im Bereich der Ränder des zumindest einen Sichtfenster-Durchbruchs;
d) Aufbringen des Display-Elements auf die Klebstoffbahn;
e) Aufbringen einer Vergussmasse von der Fahrzeuginnenseite aus auf das Display-Element und auf den das Display-Element umgebenden Bereich der Innenoberfläche der Karosserieaußenhaut, um das Display-Element gegen die Umgebung auf der Fahrzeuginnenseite abzudichten;
f) Aufbringen einer transparenten Folie von der Karosserie-Außenseite auf die Außenoberfläche der Karosserieaußenhaut zumindest im Bereich des zumindest einen Durchbruchs, die Ränder des Durchbruchs abdichtend umgebend
   oder
f') Vergießen des zumindest einen Sichtfenster-Durchbruchs mit einer transparenten Vergussmasse, um den Sichtfenster-Durchbruch abdichtend zu verschließen und
f") schleifen und polieren der ausgehärteten transparenten Vergussmasse;
g) Anschließen des Display-Elements an eine elektrische Energieversorgungs- und Steuereinrichtung.

Die Kraftfahrzeugkarosserie beziehungsweise das Kraftfahrzeugkarosserie-Element bilden dabei den die Karosserieaußenhaut aufweisenden Karosseriekörper, der mit dem Display-Element versehen wird. Unter einem Kraftfahrzeugkarosserie-Element ist dabei eine eigenständige Komponente der Kraftfahrzeugkarosserie zu verstehen, beispielsweise ein Kotflügel, eine Stoßfängerverkleidung, eine Fahrzeugtür oder eine Karosserieklappe.

### VORTEILE

Durch das Verkleben des Display-Elements mit der Karosserieaußenhaut wird eine Versteifung der Karosserieaußenhaut im Bereich des Sichtfenster-Durchbruchs erzielt und das Displayelement wird durch die auf dessen Rückseite aufgebrachte Vergussmasse und gegebenenfalls auch durch dessen auf die Vorderseite aufgebrachte transparente Vergussmasse abgedichtet und zusätzlich versteift.

Weitere bevorzugte und vorteilhafte Ausgestaltungsmerkmale des erfindungsgemäßen Verfahrens sind Gegenstand der Unteransprüche 2 bis 7.

Vorzugsweise ist das Display-Element von einer Displayfolie gebildet ist, in die in einem Vorbehandlungsschritt v) vor dem Aufbringen auf die Klebstoffbahn im Schritt d) ein Muster von Kompressionsschlitzen eingeschnitten wird, die die Displayfolie in Dickenrichtung durchdringen und die dem Display-Element flexible Eigenschaften verleihen. Dadurch lässt sich das Display-Element an eine dreidimensional gewölbte Form der Karosserieaußenhaut anpassen. Besonders vorteilhaft ist dabei, wenn die Displayfolie eine E-Paper-Folie ist.

Von Vorteil ist es zudem, wenn die Karosserieaußenhaut in einem Verfahrensschritt b') vor dem Auftragen der Klebstoffbahn im Schritt c) einer kathodischen Tauchlackierung unterzogen wird. Bei einer metallischen, insbesondere aus Eisen bestehenden, Karosserieaußenhaut wird so ein Korrosionsschutz auch gegenüber dem Klebstoff der Klebstoffbahn geschaffen.

Weiter vorteilhaft ist es, wenn die Karosserieaußenhaut nach dem Auftragen der Klebstoffbahn im Schritt c) und vor dem Aufbringen der Displayeinheit im Schritt d) in einem Verfahrensschritt c') auf der Außenoberfläche () mit einer zumindest eine Lackschicht aufweisenden Lackierung versehen wird.

Auch vorteilhaft ist es, wenn nach dem Aufbringen der Vergussmasse im Schritt f) in einem weiteren Schritt f') eine die Display-Einheit überdeckende Abdeckung auf die Innenoberfläche der Karosserieaußenhaut aufgebracht und mit dieser verbunden, vorzugsweise verklebt, wird. Eine solche Abdeckung, die beispielsweise aus Metall oder einem anderen formsteifen Material wie beispielsweise einem faserverstärkten Kunststoff bestehen kann, trägt aufgrund der, bevorzugt den Sichtfenster-Durchbruch vollständig umgebenden, Verbindung mit der Karosserieaußenhaut zur Versteifung der Karosserieaußenhaut bei.

Vorzugsweise umgibt die im Schritt c) auf die Innenoberfläche der Karosserieaußenhaut aufgetragene Klebstoffbahn den Rand des zumindest einen Sichtfenster-Durchbruchs. Dadurch wird eine Verklebung des Display-Elements entlang von dessen gesamtem Umfang ermöglicht, wodurch die Klebstoffbahn zwischen dem Rand des Sichtfenster-Durchbruchs und dem Display-Element nicht nur eine Abdichtung schafft, sondern darüber hinaus das Display-Element als mechanische Tafel vollständig kraftschlüssig an die Karosserieaußenhaut anbindet.

Bevorzugter Weise bildet dabei die im Schritt c) auf die Innenoberfläche der Karosserieaußenhaut aufgetragene Klebstoffbahn eine geschlossene Klebstofffläche aus, mit der das Display-Element im Schritt d) großflächig verbunden wird.

Der auf das Kraftfahrzeug gerichtete Teil der Aufgabe wird gelöst mit den Merkmalen des Patenanspruchs 8 und alternativ mit den Merkmalen des Patentanspruchs 9.

Ein Kraftfahrzeug mit einem in eine Karosserieaußenhaut einer Kraftfahrzeugkarosserie oder eines Kraftfahrzeugkarosserie-Elements integrierten elektrisch ansteuerbaren Display-Element, hergestellt nach einem Verfahren gemäß einem der vorhergehenden Ansprüche, ist versehen mit zumindest einem in der Karosserieaußenhaut ausgebildeten Sichtfenster-Durchbruch, hinter dem das Display-Element auf der Innenseite der Karosserieaußenhaut vorgesehen ist, und mit einer in oder auf der Außenoberfläche der Karosserieaußenhaut vor oder im zumindest einen Sichtfenster-Durchbruch vorgesehenen transparenten Sichtfensterschicht und zeichnet sich dadurch aus, dass der zumindest eine Sichtfenster-Durchbruch mit der transparenten Vergussmasse gefüllt ist und dass die transparente Vergussmasse auf ihrer Außenseite poliert ist und deren Oberfläche, vorzugsweise ansatzlos, in die umgebende Außenoberfläche der Karosserieaußenhaut übergeht.

Eine alternative Ausführungsform eines Kraftfahrzeugs mit einem in eine Karosserieaußenhaut einer Kraftfahrzeugkarosserie oder eines Kraftfahrzeugkarosserie-Elements integrierten elektrisch ansteuerbaren Display-Element, hergestellt nach einem Verfahren gemäß einem der vorhergehenden Ansprüche, ist versehen mit zumindest einem in der Karosserieaußenhaut ausgebildeten Sichtfenster-Durchbruch, hinter dem das Display-Element auf der Innenseite der Karosserieaußenhaut vorgesehen ist, und mit einer in oder auf der Außenoberfläche der Karosserieaußenhaut vor oder im zumindest einen Sichtfenster-Durchbruch vorgesehenen transparenten Sichtfensterschicht und zeichnet sich dadurch aus, dass der zumindest eine Sichtfenster-Durchbruch von einer mit der Karosserieaußenhaut verbundenen transparenten Folie überzogen ist.

Bei beiden Varianten des erfindungsgemäßen Kraftfahrzeugs ist die äußere Oberfläche der Fahrzeugkarosserie glatt, denn die Außenoberfläche der Karosserieaußenhaut und die Oberfläche des Sichtfensterbereichs gehen ansatzlos ineinander über. Das verbessert nicht nur die optische Erscheinung der Karosserie, sondern vor allem die aerodynamischen Eigenschaften des Kraftfahrzeugs.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: eine vergrößerte Schnittdarstellung einer ersten Ausführungsform eines erfindungsgemäß ausgestalteten Displayelements;
- Fig. 2: die Schnittdarstellung der Fig. 1 bei einer zweiten, alternativen Ausgestaltungsform;
- Fig. 3: eine Draufsicht auf eine segmentierte E-Paper-Folie; und
- Fig. 4: eine schematische Darstellung eines erfindungsgemäß ausgestalteten Verfahrens.

### DARSTELLUNG VON BEVORZUGTEN AUSFÜHRUNGSBEISPIELEN

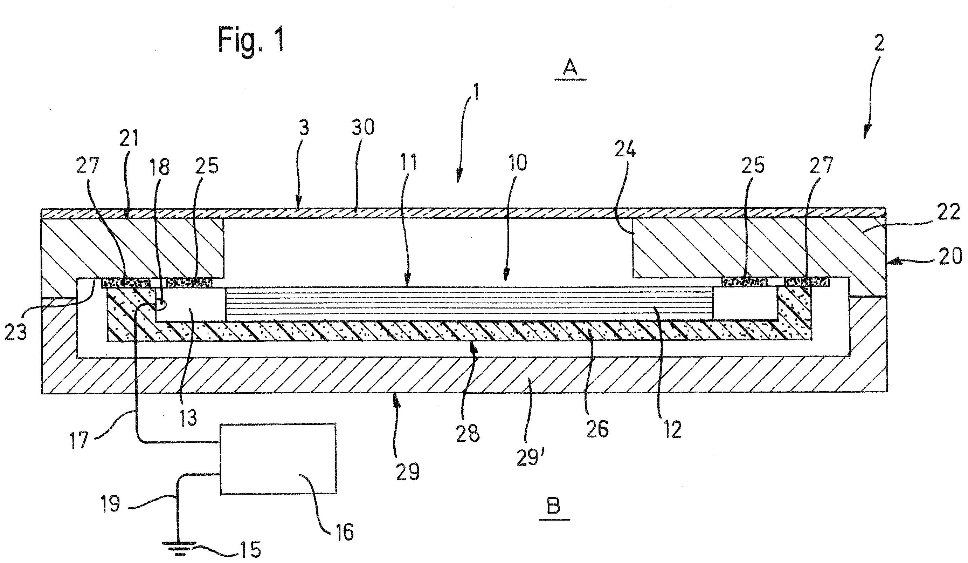

In Fig. 1 ist eine geschnittene Darstellung eines nach einer ersten Variante des Verfahrens gemäß der vorliegenden Erfindung gebildeten Display-Elements 10 einer Display-Einheit 1 dargestellt. Fig. 1 zeigt einen Karosseriekörper 20', der Teil einer Kraftfahrzeugkarosserie 20 eines Kraftfahrzeugs 2 ist. In der Karosserieaußenhaut 22 der Kraftfahrzeugkarosserie 20 ist einer ein Sichtfenster-Durchbruch 24 ausgebildet. Die Karosserieaußenhaut 22 weist eine zur Fahrzeugaußenseite A gewandte Außenoberfläche 21 sowie eine von der Außenseite weg weisende und zur Fahrzeuginnenseite B gerichtete Innenoberfläche 23 auf.

Die Display-Einheit 1 ist auf der zur Fahrzeuginnenseite B weisenden Seite der Karosserieaußenhaut 22 gemäß dem weiter unten noch beschriebenen erfindungsgemäßen Verfahren ausgebildet. Die Display-Einheit 1 weist das Display-Element 10 auf, das beispielsweise von einer E-Paper-Folie 11 gebildet ist, weist einen aktiven Anzeigebereich 12 sowie einen Befestigungsrand 13 auf. Anstelle einer E-Paper-Folie kann auch jede andere Art von elektrisch betriebenen Displays wie beispielsweise LCD-Anzeigen, OLED-Anzeigen oder ähnliche Displays vorgesehen sein.

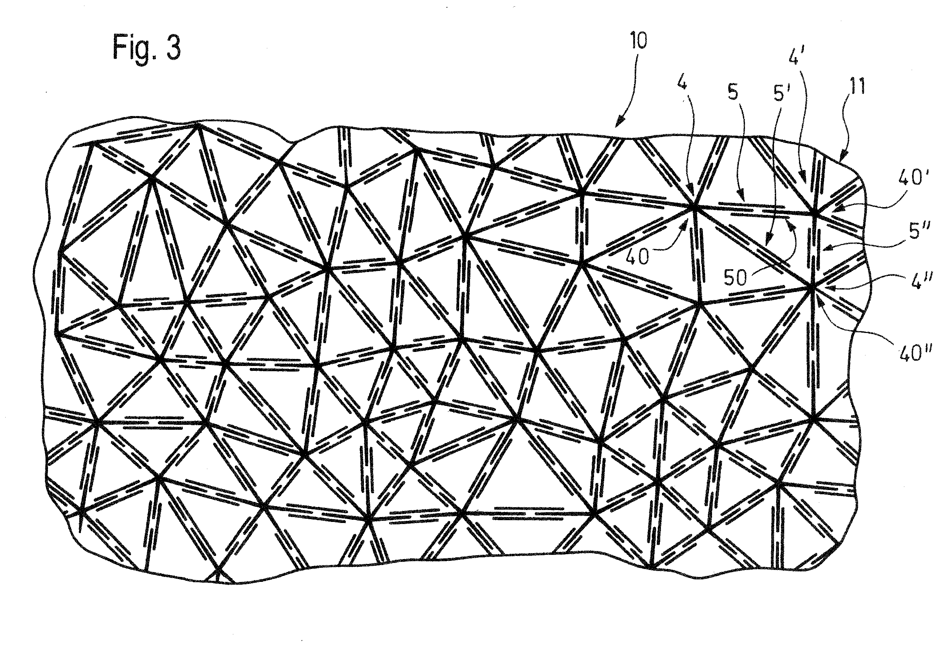

Die E-Paper-Folie 11 kann für die Anbringung in einem ebenen Karosseriebereich eben ausgebildet sein, sie kann aber auch zweidimensional oder drei-dimensional gewölbt ausgebildet sein, um sich der Raumform der Karosserieaußenhaut 22 anpassen zu können. Eine dafür geeignete E-Paper-Folie 11 ist segmentiert ausgebildet, wie dies weiter unten noch in Verbindung mit Fig. 3 beschrieben wird.

Das Display-Element 10, beispielsweise die hier gezeigte E-Paper-Folie 11, ist mit einem Befestigungsrand 13 ausgebildet, der mittels zumindest einer auf der Innenoberfläche 23 aufgebrachten Klebstoffbahn 25 mit der Karosserieaußenhaut 22 verbunden ist. Der Befestigungsrand 13 weist auch elektrische Anschlusskontakte für das Display-Element 10, beispielsweise elektrische Massekontakte, auf, in die beispielsweise Leiterbahnen der E-Paper-Folie 11 münden. Diese elektrischen Massekontakte sind mit der Kraftfahrzeugkarosserie 20 als elektrische Kraftfahrzeugmasse 15 elektrisch leitend kontaktiert, beispielsweise punktverlötet oder punktverschweißt.

Eine in den Figuren nur schematisch dargestellte elektrische Versorgungs- und Steuereinrichtung 16 für das Display-Element 10 ist über eine erste elektrische Versorgungsleitung 17 mit im Befestigungsrand 13 des Display-Elements 10 ausgebildeten zweiten Anschlusskontakten, beispielsweise Pluspol-Kontakten 18, elektrisch leitend verbunden. Eine zweite elektrische Versorgungsleitung 19 führt von der elektrischen Versorgungs- und Steuereinrichtung 16 zur elektrischen Kraftfahrzeugmasse 15.

Auf die zur Fahrzeuginnenseite B weisende Rückseite des Display-Elements 10 ist eine Vergussmasse 26 aufgebracht, die das Display-Element, also hier die E-Paper-Folie 11, auf der Rückseite und an den Rändern umgibt und dort entweder direkt mit der Innenoberfläche 23 der Karosserieaußenhaut 22 verbunden ist oder mittels einer den Sichtfenster-Durchbruch 24 umlaufend umgebenden Klebeschicht 27 abdichtend verklebt ist. Die Vergussmasse 26 bildet auf diese Weise eine innere Abdeckung 28, die das hier von der E-Paper-Folie 11 gebildete Display-Element 10 flüssigkeitsdicht gegenüber der Karosserieaußenhaut 22 abdichtet.

Ein mechanisch steifer Deckel 29' bildet eine äußere Abdeckung 29 und deckt auf der Fahrzeuginnenseite B die Einheit aus dem Display-Element 10 und der inneren Abdeckung 28 ab und ist, den Sichtfenster-Durchbruch 24 überbrückend, mit der Karosserieaußenhaut 22 mechanisch fest verbunden. Der äußere Deckel 29 versteift dadurch die Karosserieaußenhaut 22 im Bereich des Sichtfenster-Durchbruchs 24.

Auf der Außenoberfläche 21 der Karosserieaußenhaut 22 ist eine transparente Folie 30 vorgesehen, die auf der Karosserieaußenhaut 22 fest haftet, beispielsweise mit dieser verklebt ist. Die transparente Folie 30 überspannt den zumindest einen Sichtfenster-Durchbruch 24 und bildet dort eine transparente Sichtfensterschicht 3. Der Sichtfenster-Durchbruch 24 und damit auch der Raum, in dem sich das Display-Element 10 befindet, ist dadurch auch gegenüber der Umgebung des Kraftfahrzeugs 1 auf der Außenseite A gegen Feuchtigkeitseintritt abgedichtet.

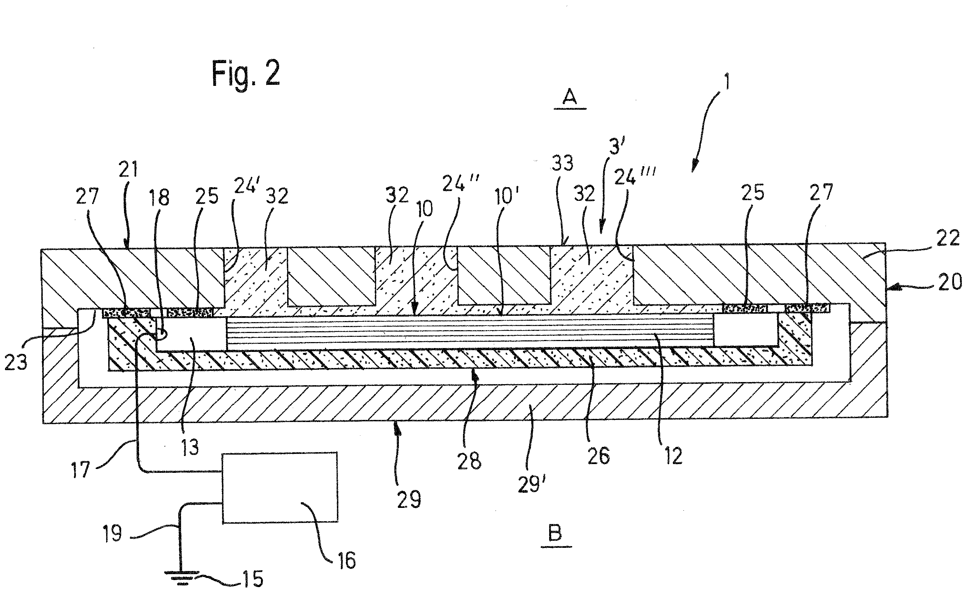

Eine zweite, abgewandelte Ausführungsform einer nach einer alternativen Variante des Verfahrens gemäß der Erfindung in die Karosserieaußenhaut 22 einer Kraftfahrzeugkarosserie 20 eines Kraftfahrzeugs 2 integrierten Display-Einheit 10 ist in Fig. 2 dargestellt. Bis auf die Ausgestaltung der transparenten Sichtfensterschicht 3' entspricht diese Ausführungsform jener aus Fig. 1. Daher werden hier nur die Abweichungen davon beschrieben. Nach der wie im Beispiel der Fig. 1 erfolgten Montage der Display-Einheit 10 an der Karosserieaußenhaut 22, dem Vergießen der Rückseite der Display-Einheit 10 zur Bildung der inneren Abdeckung 28 und der Anbringung des äußeren Deckels 29 an der Rückseite der Karosserieaußenhaut 22 wird der zumindest eine Sichtfenster-Durchbruch 24', 24", 24‴ zur Bildung der transparenten Sichtfensterschicht 3' mit einer transparenten Vergussmasse 32 gefüllt, die auch in die zwischen der Vorderseite 10' der Display-Einheit 10 und die Innenoberfläche 23 der Karosserieaußenhaut 22 gebildeten Spalträume eintritt und diese ausfüllt. Diese transparente Vergussmasse 32 ist auf ihrer zur Fahrzeugaußenseite A weisenden Außenoberfläche 33 poliert und an die den Sichtfenster-Durchbruch 24 umgebende Außenoberfläche 21 der Karosserieaußenhaut 22 angeglichen, so dass die beiden Außenoberflächen 21, 33 ansatzlos glatt ineinander übergehen.

Fig. 3 zeigt einen Flächenausschnitt einer in der nicht vorveröffentlichten deutschen Patentanmeldung DE 10 2022 000 005.9 beschriebenen segmentierten E-Paper-Folie 11, die mit einer Vielzahl von Kompressionsbereichen 4, 4', 4" und Expansionsbereichen 5, 5', 5" versehen ist. Jeder Kompressionsbereich 4, 4', 4" weist ein sternförmiges Kompressionselement 40, 40', 40" auf, das durch eine Mehrzahl von aus einem gemeinsamen Zentrum sternförmig auseinanderlaufenden Kompressionsschlitzen gebildet ist, die die segmentierte E-Paper-Folie 11 in Dickenrichtung durchdringen. Zwischen zwei benachbarten Kompressionselementen 40, 40' ist stets ein mit Expansionsschlitzen versehenes Expansionselement 50 vorgesehen, das einen Expansionsbereich 5 bildet. Auch die Expansionsschlitze durchdringen die E-Paper-Folie 11 in Dickenrichtung.

Wird auf diese segmentierte E-Paper-Folie 11 in der Folienfläche eine Zugkraft aufgebracht, die quer, beispielsweise rechtwinklig, zur Längserstreckung eines Expansionsschlitzes wirkt, so vergrößert sich die Breite des Expansionsschlitzes, wodurch sich die Dekorfolie 2 in diesem Bereich lokal quer zur Längserstreckung dehnt. Wird auf die E-Paper-Folie 11 in der Folienfläche eine Druckkraft oder Schubkraft aufgebracht, die in Richtung auf das Zentrum eines Kompressionselements 40 wirkt, so verringert sich die Breite von zumindest einem Kompressionsschlitz wodurch die E-Paper-Folie 11 in diesem Bereich lokal gestaucht wird. Diese lokalen Expansions- und Stauchfähigkeiten der segmentierten E-Paper-Folie 11 ermöglichen es, die E-Paper-Folie 11 dreidimensional zu verformen und an Karosseriewölbungen anzupassen.

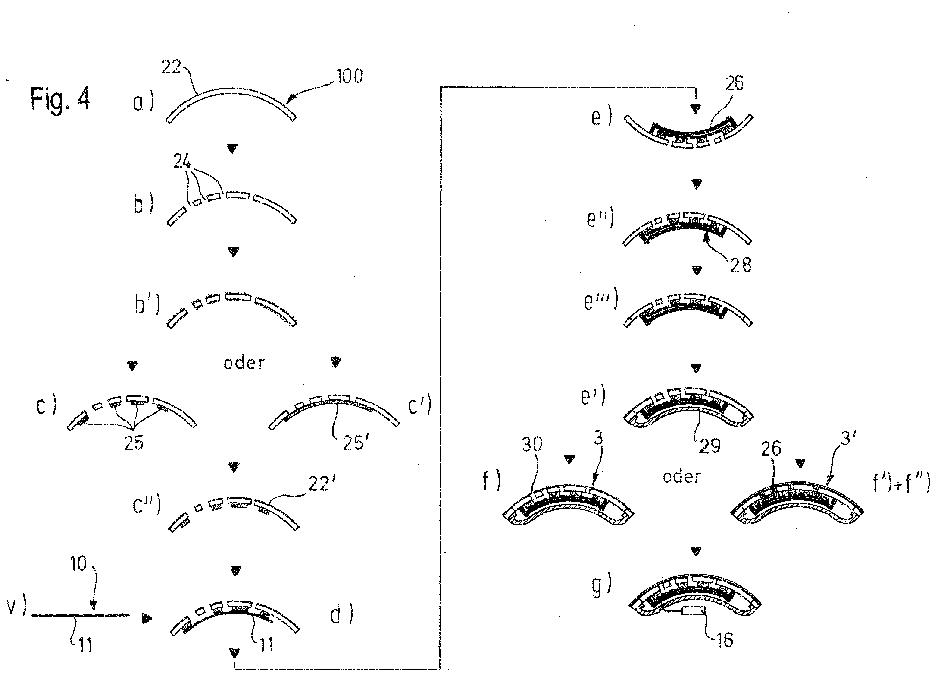

In Fig. 4 ist anhand eines Workflow-Schemas der Ablauf des erfindungsgemäßen Verfahrens zur Integration eines elektrisch ansteuerbaren Display-Elements 1 in eine Karosserieaußenhaut 22 dargestellt.

Zunächst wird ein bereits geformtes Karosserieblech 100, das einen die Karosserieaußenhaut 22 aufweisenden Karosseriekörpers 20' bildet, im Schritt a) für das erfindungsgemäße Verfahren bereitgestellt. In einem nachfolgenden Schritt b) wird zumindest ein Sichtfenster-Durchbruch 24 in die Karosserieaußenhaut 22, beispielsweise durch Lasern, eingebracht. Diese mit Sichtfenster-Durchbrüchen 24 versehene Karosserieaußenhaut 22 wird dann optional in einem Schritt b') einer kathodischen Tauchlackierung (KTL) unterzogen und dabei mit einer Korrosionsschutzschicht versehen. Anschließend wird in einem Schritt c) zumindest eine Klebstoffbahn 25 auf die Innenoberfläche 23 der Karosserieaußenhaut 22 im Bereich der Ränder des zumindest einen Sichtfenster-Durchbruchs 24 aufgetragen. Alternativ kann der Klebstoff im Schritt c') großflächig auf die die Innenoberfläche 23 der Karosserieaußenhaut 22 aufgetragen werden und bildet so eine großflächige Klebstoffschicht 25'. In einem Zwischenschritt c") wird die Karosserieaußenhaut 22 auf der Außenoberfäche 21 mit einer zumindest eine Lackschicht 22' aufweisenden Lackierung versehen.

Im Schritt d) wird dann das hier von einer in einem Vorbehandlungsschritt v) segmentierten E-Paper-Folie 11 gebildete Display-Element 10 entweder lokal auf die Klebstoffbahn(en) 25 oder großflächig auf die großflächige Klebstoffschicht 25' aufgebracht. Danach wird - nach einem Umdrehen des Karosserie-Elements - im Schritt e) zur Bildung einer inneren Abdeckung 28 des Display-Elements 10 eine Vergussmasse 26 von der Fahrzeuginnenseite B aus auf das Display-Element 10 und auf den das Display-Element 10 umgebenden Bereich der Innenoberfläche 23 der Karosserieaußenhaut 22 aufgebracht, um später das Display-Element 10 gegen die Umgebung auf der Fahrzeuginnenseite B abzudichten.

Anschließend wird nach einer Vorbereitung entsprechender Fügestellen auf der Innenoberfläche 23 der Karosserieaußenhaut 22 in Vorbereitungsschritten e") und e‴) in einem weiteren Schritt e') eine die Display-Einheit 1 überdeckende äußere Abdeckung 29, beispielsweise ein mechanisch steifer Deckel 29', auf die Innenoberfläche 23 der Karosserieaußenhaut 22 aufgebracht und mit dieser verbunden, vorzugsweise verklebt. Danach wird eine transparente Sichtfensterschicht 3, 3' im Bereich des Sichtfenster-Durchbruchs 24 angebracht. Dies erfolgt entweder im Schritt f) durch Aufbringen einer transparenten Folie 30 von der Karosserie-Außenseite auf die Außenoberfläche 21 der Karosserieaußenhaut 22 zumindest im Bereich des zumindest einen Sichtfenster-Durchbruchs 24, die Ränder des Sichtfenster-Durchbruchs 24 abdichtend umgebend, oder im alternativen Schritt f') durch Vergießen des zumindest einen Sichtfenster-Durchbruchs 24 mit einer transparenten Vergussmasse 26, um den Sichtfenster-Durchbruch 24 abdichtend zu verschließen, und anschließendem Schleifen und Polieren der ausgehärteten transparenten Vergussmasse 26 im Schritt f"). Schließlich wird das Display-Element 10 noch im Schritt g) an eine elektrische Energieversorgungs- und Steuereinrichtung 16 elektrisch angeschlossen.

Die Erfindung ist nicht auf das obige Ausführungsbeispiel beschränkt, das lediglich der allgemeinen Erläuterung des Kerngedankens der Erfindung dient. Im Rahmen des Schutzumfangs können sowohl das erfindungsgemäße Verfahren als auch die erfindungsgemäße Vorrichtung vielmehr auch andere als die oben beschriebenen Ausgestaltungsformen annehmen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Display-Einheit
- 2: Kraftfahrzeug
- 3: transparenten Sichtfensterschicht
- 3': transparenten Sichtfensterschicht
- 4: Kompressionsbereich
- 4': Kompressionsbereich
- 4": Kompressionsbereich
- 5: Expansionsbereich
- 5': Expansionsbereich
- 5": Expansionsbereich
- 10: Display-Element
- 11: E-Paper-Folie
- 12: aktiver Anzeigebereich
- 13: Befestigungsrand
- 14: Klebeschicht
- 15: elektrische Kraftfahrzeugmasse
- 16: Energieversorgungs- und Steuereinrichtung
- 17: erste elektrische Versorgungsleitung
- 18: Pluspol-Kontakt
- 19: zweite elektrische Versorgungsleitung
- 20: Kraftfahrzeugkarosserie
- 20': Karosseriekörper
- 21: Außenoberfläche
- 22: Karosserieaußenhaut
- 22': Lackschicht
- 23: Innenoberfläche
- 24: Sichtfenster-Durchbruch
- 24': Sichtfenster-Durchbruch
- 24": Sichtfenster-Durchbruch
- 24‴: Sichtfenster-Durchbruch
- 25: Klebstoffbahn
- 25': großflächige Klebstoffschicht
- 26: Vergussmasse
- 27: Klebeschicht
- 28: innere Abdeckung
- 29: äußere Abdeckung
- 29': Deckel
- 30: transparente Folie
- 32: transparente Vergussmasse
- 40: Kompressionselement
- 40': Kompressionselement
- 40": Kompressionselement
- 50: Expansionselement
- 100: Karosserieblech

- A: Fahrzeugaußenseite
- B: Fahrzeuginnenseite

## Patentansprüche

1. Verfahren zur Integration eines elektrisch ansteuerbaren Display-Elements (1) in eine Karosserieaußenhaut (22) einer Kraftfahrzeugkarosserie (20) oder eines Kraftfahrzeugkarosserie-Elements mit den Schritten:
a) Bereitstellen eines die Karosserieaußenhaut (22) aufweisenden Karosseriekörpers (20'), wobei die Karosserieaußenhaut (22) eine zur Fahrzeugaußenseite (A) weisende Außenoberfläche (21) und eine zur Fahrzeuginnenseite (B) weisende Innenoberfläche (23) aufweist;
b) Einbringen von zumindest einem Sichtfenster-Durchbruch (24; 24', 24", 24‴) in die Karosserieaußenhaut (22);
c) Auftragen von zumindest einer Klebstoffbahn (25; 25') auf die Innenoberfläche (23) der Karosserieaußenhaut (22) im Bereich der Ränder des zumindest einen Sichtfenster-Durchbruchs (24; 24', 24", 24‴);
d) Aufbringen des Display-Elements (10) auf die Klebstoffbahn (25; 25');
e) Aufbringen einer Vergussmasse (26) von der Fahrzeuginnenseite (B) aus auf das Display-Element (10) und auf den das Display-Element (10) umgebenden Bereich der Innenoberfläche (23) der Karosserieaußenhaut (22), um das Display-Element (10) gegen die Umgebung auf der Fahrzeuginnenseite abzudichten;
f) Aufbringen einer transparenten Folie (30) von der Karosserie-Außenseite auf die Außenoberfläche (21) der Karosserieaußenhaut (22) zumindest im Bereich des zumindest einen Durchbruchs (24), die Ränder des Durchbruchs (24) abdichtend umgebend
oder
f') Vergießen des zumindest einen Karosserie-Durchbruchs (24', 24", 24‴) mit einer transparenten Vergussmasse (32), um den Karosserie-Durchbruch (24', 24", 24‴) abdichtend zu verschließen und
f") schleifen und polieren der ausgehärteten transparenten Vergussmasse (32);
g) Anschließen des Display-Elements (10) an eine elektrische Energieversorgungs- und Steuereinrichtung (16).

2. Verfahren nach Anspruch 1,
**dadurch gekennzeichnet,**
**dass** das Display-Element (10) von einer Displayfolie (11), vorzugsweise einer E-Paper-Folie, gebildet ist, in die in einem Vorbehandlungsschritt v) vor dem Aufbringen auf die Klebstoffbahn (25, 25') im Schritt d) ein Muster von Kompressionsschlitzen eingeschnitten wird, die die Displayfolie (11) in Dickenrichtung durchdringen und die dem Display-Element (10) flexible Eigenschaften verleihen.

3. Verfahren nach Anspruch 1 oder 2,
**dadurch gekennzeichnet,**
**dass** die Karosserieaußenhaut (22) in einem Verfahrensschritt b') vor dem Auftragen der Klebstoffbahn (25, 25') im Schritt c) einer kathodischen Tauchlackierung unterzogen wird.

4. Verfahren nach einem der vorhergehenden Ansprüche,
**dadurch gekennzeichnet,**
**dass** die Karosserieaußenhaut (22) nach dem Auftragen der Klebstoffbahn (25, 25') im Schritt c) und vor dem Aufbringen der Display-Einheit (1) im Schritt d) in einem Verfahrensschritt c") auf der Außenoberfläche (21) mit einer zumindest eine Lackschicht (22') aufweisenden Lackierung versehen wird.

5. Verfahren nach einem der vorhergehenden Ansprüche,
**dadurch gekennzeichnet,**
**dass** nach dem Aufbringen der Vergussmasse (26) im Schritt e) in einem weiteren Schritt e') eine die Display-Einheit (1) überdeckende äußere Abdeckung (29) auf die Innenoberfläche (23) der Karosserieaußenhaut (22) aufgebracht und mit dieser verbunden, vorzugsweise verklebt, wird.

6. Verfahren nach einem der vorhergehenden Ansprüche,
**dadurch gekennzeichnet,**
**dass** die im Schritt c) auf die Innenoberfläche (23) der Karosserieaußenhaut (22) aufgetragene Klebstoffbahn (25) den Rand des zumindest einen Sichtfenster-Durchbruchs (24) umgibt.

7. Verfahren nach einem der vorhergehenden Ansprüche,
**dadurch gekennzeichnet,**
**dass** die in einem alternativen Schritt c') auf die Innenoberfläche (23) der Karosserieaußenhaut (22) aufgetragene Klebstoffbahn (25') eine geschlossene Klebstoffschicht ausbildet, mit der das Display-Element (10) im Schritt d) großflächig verbunden wird.

8. Kraftfahrzeug mit einem in eine Karosserieaußenhaut (22) einer Kraftfahrzeugkarosserie (20) oder eines Kraftfahrzeugkarosserie-Elements integrierten elektrisch ansteuerbaren Display-Element (10), hergestellt nach einem Verfahren gemäß einem der vorhergehenden Ansprüche, mit zumindest einem in der Karosserieaußenhaut (22) ausgebildeten Sichtfenster-Durchbruch (24), hinter dem das Display-Element (10) auf der Innenseite (23) der Karosserieaußenhaut (22) vorgesehen ist, und mit einer in oder auf der Außenoberfläche (21) der Karosserieaußenhaut (22) vor oder im zumindest einen Sichtfenster-Durchbruch (24) vorgesehenen transparenten Sichtfensterschicht (3),
**dadurch gekennzeichnet,**
**dass** der zumindest eine Sichtfenster-Durchbruch (24) von einer mit der Karosserieaußenhaut (22) verbundenen transparenten Folie (30) überzogen ist.

9. Kraftfahrzeug (2) mit einem in eine Karosserieaußenhaut (22) einer Kraftfahrzeugkarosserie (20) oder eines Kraftfahrzeugkarosserie-Elements integrierten elektrisch ansteuerbaren Display-Element (10), hergestellt nach einem Verfahren gemäß einem der vorhergehenden Ansprüche, mit zumindest einem in der Karosserieaußenhaut (22) ausgebildeten Sichtfenster-Durchbruch (24', 24", 24‴), hinter dem das Display-Element (10) auf der Innenseite (23) der Karosserieaußenhaut (22) vorgesehen ist, und mit einer in oder auf der Außenoberfläche (21) der Karosserieaußenhaut (22) vor oder im zumindest einen Sichtfenster-Durchbruch (24', 24", 24‴) vorgesehenen transparenten Sichtfensterschicht (3'),
**dadurch gekennzeichnet,**
**dass** der zumindest eine Sichtfenster-Durchbruch (24', 24", 24"') mit einer transparenten Vergussmasse (26) gefüllt ist und wobei die transparente Vergussmasse (26) auf ihrer Außenseite poliert ist und deren Oberfläche (33), vorzugsweise ansatzlos, in die umgebende Außenoberfläche (21) der Karosserieaußenhaut (22) übergeht.

## Claims

1. Method for integrating an electrically activatable display element (1) into a body outer skin (22) of a motor vehicle body (20) or a motor vehicle body element, with the steps:
a) providing a body shell (20') having the body outer skin (22), wherein the body outer skin (22) has an outer surface (21) facing the outside (A) of the vehicle and an inner surface (23) facing the inside (B) of the vehicle;
b) introducing at least one viewing window opening (24; 24', 24", 24‴) into the body outer skin (22);
c) applying at least one strip of adhesive (25; 25') to the inner surface (23) of the body outer skin (22) in the region of the edges of the at least one viewing window opening (24; 24', 24'', 24‴);
d) attaching the display element (10) to the strip of adhesive (25; 25');
e) attaching a casting compound (26) from the inside (B) of the vehicle to the display element (10) and to the region, surrounding the display element (10), of the inner surface (23) of the body outer skin (22) in order to seal the display element (10) from the surroundings on the inside of the vehicle;
f) attaching a transparent film (30) from the outside of the body to the outer surface (21) of the body outer skin (22) at least in the region of the at least one opening (24), surrounding the edges of the opening (24) in sealing fashion
or
f') casting the at least one body opening (24', 24", 24‴) with a transparent casting compound (32) in order to close the body opening (24', 24'', 24‴) in sealing fashion, and
f'') grinding and polishing the hardened transparent casting compound (32);
g) connecting the display element (10) to an electrical energy supply and control device (16).

2. Method according to Claim 1, **characterized in that** the display element (10) is formed by a display film (11), preferably an e-paper film, into which, in a pretreatment step v) before attachment to the strip of adhesive (25, 25') in step d), a pattern of compression slits which pierce the display film (11) in the thickness direction and give the display element (10) flexible properties is cut.

3. Method according to Claim 1 or 2, **characterized in that** the body outer skin (22) is subject to cathodic dip coating in a method step b') before the application of the strip of adhesive (25, 25') in step c).

4. Method according to one of the preceding claims, **characterized in that** the body outer skin (22), after the application of the strip of adhesive (25, 25') in step c) and before the attachment of the display unit (1) in step d), is provided in a method step c") on the outer surface (21) with a coating having at least one paint layer (22').

5. Method according to one of the preceding claims, **characterized in that**, after the attachment of the casting compound (26) in step e), in a further step e') an outer covering (29) over the display unit (1) is attached to the inner surface (23) of the body outer skin (22) and connected, preferably adhesively bonded, thereto.

6. Method according to one of the preceding claims, **characterized in that** the strip of adhesive (25) applied to the inner surface (23) of the body outer skin (22) in step c) surrounds the edge of the at least one viewing window opening (24).

7. Method according to one of the preceding claims, **characterized in that** the strip of adhesive (25') applied in an alternative step c') to the inner surface (23) of the body outer skin (22) forms a closed adhesive layer to which the display element (10) is connected in step d) over a wide area.

8. Motor vehicle with an electrically activatable display element (10) which is integrated into a body outer skin (22) of a motor vehicle body (20) or a motor vehicle body element, produced according to a method according to one of the preceding claims, with at least one viewing window opening (24) which is formed in the body outer skin (22) and behind which the display element (10) is provided on the inside (23) of the body outer skin (22), and with a transparent viewing window layer (3) provided in or on the outer surface (21) of the body outer skin (22) in front of or in at least one viewing window opening (24), **characterized in that** the at least one viewing window opening (24) is covered by a transparent film (30) connected to the body outer skin (22).

9. Motor vehicle (2) with an electrically activatable display element (10) which is integrated into a body outer skin (22) of a motor vehicle body (20) or a motor vehicle body element, produced according to a method according to one of the preceding claims, with at least one viewing window opening (24', 24'', 24‴) which is formed in the body outer skin (22) and behind which the display element (10) is provided on the inside (23) of the body outer skin (22), and with a transparent viewing window layer (3') provided in or on the outer surface (21) of the body outer skin (22) in front of or in at least one viewing window opening (24', 24'', 24‴), **characterized in that** the at least one viewing window opening (24', 24'', 24‴) is filled with a transparent casting compound (26), and wherein the transparent casting compound (26) is polished on its outside and the surface (33) of which merges, preferably seamlessly, into the surrounding outer surface (21) of the body outer skin (22).

## Revendications

1. Procédé d'intégration d'un élément d'affichage (1) commandable électriquement dans une coque de carrosserie extérieure (22) d'une carrosserie de véhicule automobile (20) ou d'un élément de carrosserie de véhicule automobile, ledit procédé comprenant les étapes suivantes:
a) fournir un corps de carrosserie (20') comportant la coque de carrosserie extérieure (22), la coque de carrosserie extérieure (22) ayant une surface extérieure (21) dirigée vers le côté de véhicule extérieur (A) et une surface intérieure (23) dirigée vers le côté de véhicule intérieur (B) ;
b) ménager au moins un passage de fenêtre d'observation (24 ; 24', 24", 24‴) dans la coque de carrosserie extérieure (22) ;
c) appliquer au moins une bande adhésive (25 ; 25') sur la surface intérieure (23) de la coque de carrosserie extérieure (22) dans la zone des bords de l'au moins un passage de fenêtre d'observation (24 ; 24', 24'', 24‴) ;
d) appliquer l'élément d'affichage (10) sur la bande adhésive (25 ; 25') ;
e) appliquer une matière d'enrobage (26) depuis le côté de véhicule intérieur (B) sur l'élément d'affichage (10) et sur la zone de la surface intérieure (23) de la coque de carrosserie extérieure (22) qui entoure l'élément d'affichage (10) afin d'étanchéifier l'élément d'affichage (10) vis-à-vis de l'environnement du côté de véhicule intérieur ;
f) appliquer un film transparent (30) depuis le côté de carrosserie extérieur sur la surface extérieure (21) de la coque de carrosserie extérieure (22) au moins dans la zone de l'au moins un passage (24), qui entoure de manière étanche les bords du passage (24) ou
f') enrober l'au moins un passage de carrosserie (24', 24'', 24‴) avec une matière d'enrobage transparente (32) afin de fermer de manière étanche le passage de carrosserie (24', 24'', 24‴) et
f") meuler et polir la matière d'enrobage transparente durcie (32) ;
g) raccorder l'élément d'affichage (10) à un dispositif d'alimentation électrique et de commande (16).

2. Procédé selon la revendication 1,
**caractérisé en ce que**
l'élément d'affichage (10) est formé par un film d'affichage (11), de préférence un film de papier électronique, dans lequel un motif de fentes de compression, qui pénètrent dans le film d'affichage (11) dans le sens de l'épaisseur et qui confèrent des propriétés flexibles à l'élément d'affichage (10), est découpé dans une étape de prétraitement v) avant l'application sur la bande adhésive (25, 25') à l'étape d).

3. Procédé selon la revendication 1 ou 2,
**caractérisé en ce que**
la coque de carrosserie extérieure (22) est soumise à une peinture par immersion cathodique à une étape de procédé b') avant l'application de la bande adhésive (25, 25') à l'étape c).

4. Procédé selon l'une des revendications précédentes,
**caractérisé en ce que**
la coque de carrosserie extérieure (22) est pourvue d'une peinture comportant au moins une couche de peinture (22') sur la surface extérieure (21) dans une étape de procédé c") après l'application de la bande adhésive (25, 25') à l'étape c) et avant l'application de l'unité d'affichage (1) à l'étape d).

5. Procédé selon l'une des revendications précédentes,
**caractérisé en ce que**
après l'application de la matière d'enrobage (26) à l'étape e), un revêtement extérieur (29) recouvrant l'unité d'affichage (1) est appliqué à une étape supplémentaire e') sur la surface intérieure (23) de la coque de carrosserie extérieure (22) et est relié, de préférence collé, à celle-ci.

6. Procédé selon l'une des revendications précédentes,
**caractérisé en ce que**
la bande adhésive (25) appliquée sur la surface intérieure (23) de la coque de carrosserie extérieure (22) à l'étape c) entoure le bord de l'au moins un passage de fenêtre d'observation (24).

7. Procédé selon l'une des revendications précédentes,
**caractérisé en ce que**
la bande adhésive (25') appliquée sur la surface intérieure (23) de la coque de carrosserie extérieure (22) à une étape alternative c') forme une couche adhésive fermée à laquelle l'élément d'affichage (10) est relié sur une grande surface à l'étape d).

8. Véhicule comprenant un élément d'affichage (10) commandable électriquement intégré dans une coque de carrosserie extérieure (22) d'une carrosserie de véhicule automobile (20) ou d'un élément de carrosserie de véhicule automobile, lequel élément d'affichage est fabriqué selon un procédé selon l'une des revendications précédentes et pourvu d'au moins un passage de fenêtre d'observation (24) ménagé dans la coque de carrosserie extérieure (22), en arrière duquel l'élément d'affichage (10) est prévu sur le côté intérieur (23) de la coque de carrosserie extérieure (22), et d'une couche de fenêtre d'observation transparente (3) prévue dans ou sur la surface extérieure (21) de la coque de carrosserie extérieure (22) devant ou dans au moins un passage de fenêtre d'observation (24),
**caractérisé en ce que**
l'au moins un passage de fenêtre d'observation (24) est recouvert par un film transparent (30) relié à la coque de carrosserie extérieure (22).

9. Véhicule (2) comprenant un élément d'affichage (10) commandable électriquement intégré dans une coque de carrosserie extérieure (22) d'une carrosserie de véhicule automobile (20) ou d'un élément de carrosserie de véhicule automobile, lequel élément d'affichage est fabriqué selon un procédé selon l'une des revendications précédentes et pourvu d'au moins un passage de fenêtre d'observation (24', 24'', 24‴) formée dans la coque de carrosserie extérieure (22), en arrière duquel l'élément d'affichage (10) est prévu sur le côté intérieur (23) de la coque de carrosserie extérieure (22), et d'une couche de fenêtre d'observation transparente (3') prévue dans ou sur la surface extérieure (21) de la coque de carrosserie extérieure (22) devant ou dans au moins un passage de fenêtre d'observation (24', 24", 24‴),
**caractérisé en ce que**
l'au moins un passage de fenêtre d'observation (24', 24'', 24‴) est rempli d'une matière d'enrobage transparente (26), et la matière d'enrobage transparente (26) étant polie sur son côté extérieur et sa surface (33) se fondant, de préférence sans saillie, dans la surface extérieure environnante (21) de la coque de carrosserie extérieure (22).
